# FASCICULE DE BREVET EUROPEEN

(11) **EP 0 983 146 B1**
(45) Date de publication et mention de la délivrance du brevet: **24.09.2003**
(21) Numéro de dépôt: 98924376.1
(22) Date de dépôt: 05.05.1998
(51) Int. Cl.: B41J 3/54, G06K 15/10

(54) **IMPRIMANTE POUR APPAREIL DE BUREAU**
DRUCKER FÜR BÜROAUSSTATTUNG
PRINTER FOR OFFICE EQUIPMENT

(30) Priorité: 06.05.1997 FR 9705543
(43) Date de publication de la demande: 08.03.2000
(73) Titulaire: SAGEM SA, 75116 Paris (FR)
(72) Inventeur: NAUCHE, Gilles, F-92400 Courbevoie (FR); LEYLDE, Philippe, F-95800 Cergy le Haut (FR)
(74) Mandataire: Bloch, Gérard
(86) Numéro de dépôt international: FR9800898
(87) Numéro de publication internationale: WO98050236

(56) Documents cités:
- EP-A- 0 361 780
- EP-A- 0 674 289
- US-A- 5 081 596
- PATENT ABSTRACTS OF JAPAN vol. 096, no. 007, 31 juillet 1996 & JP 08 065532 A (CANON INC), 8 mars 1996,

## Description

Les imprimantes de télécopieurs et autres appareils de bureau comportent un module d'impression destiné à imprimer une image sur un support d'impression.

Généralement, le module d'impression est soit un module laser, soit un module à jet d'encre. Les imprimantes, laser ou à jet d'encre, impriment soit exclusivement en noir, soit en couleur. Dans ce dernier cas, le module d'impression utilise au moins trois têtes et/ou trois consommables d'impression de couleurs respectives différentes (cyan, magenta et jaune), et éventuellement une de couleur noire, afin de composer par addition une palette variée de couleurs d'impression.

L'impression laser offre de multiples avantages : rapidité, excellente qualité d'impression et faible coût de la copie d'impression. En revanche, le coût de l'impression laser couleur est très élevé.

L'impression par jet d'encre, quant à elle, est avantageuse pour la couleur, mais elle est lente et son coût à la copie est élevé.

Bref, les imprimantes laser et à jet d'encre ont chacune des avantages et des inconvénients auxquels l'invention vise à trouver un compromis.

Le document EP 674 289 enseigne un dispositif d'impression d'une image composite comprenant une pluralité d'objets de types différents. On discrimine les objets suivant leur type et pour chacun on détermine des caractéristiques par lesquelles on règle de façon optimale les paramètres d'impression.

Le document EP 361 780 enseigne une imprimante pour appareil de bureau comportant, pour imprimer une image sur un support d'impression, deux modules d'impression monochrome et d'impression polychrome, respectivement.

Le module d'impression monochrome est destiné à imprimer des informations de texte et le module d'impression polychrome des informations de graphique en couleurs. La discrimination des informations à imprimer par le module d'impression monochrome et des informations à imprimer par le module d'impression polychrome est basée sur la nature de ces informations (texte ou graphique).

La présente invention propose d'abord de discriminer les informations à imprimer de façon plus précise.

A cet effet, l'invention concerne une imprimante pour appareil de bureau comportant, pour imprimer une image sur un support d'impression, deux modules d'impression monochrome laser et d'impression polychrome à jet d'encre, respectivement, caractérisée par le fait qu'elle comprend des moyens d'analyse des couleurs de l'image à imprimer agencés pour analyser la couleur de pavés formant l'image et pour commander les fonctionnements complémentaires des deux modules d'impression afin d'imprimer l'image.

L'invention consiste donc à décomposer l'image à imprimer en pavés d'image et à discriminer ceux-ci selon leur couleur.

Dans une forme de réalisation de l'invention, les moyens d'analyse des couleurs sont agencés pour déterminer point à point les couleurs de l'image.

Dans ce cas, la qualité de la reproduction est excellente.

Dans un autre mode de réalisation, les moyens d'analyse des couleurs sont agencés pour évaluer si l'image est globalement monochrome ou polychrome.

Avantageusement, les deux modules d'impression sont couplés en série le long d'un chemin d'impression unique. Les impressions en noir et en couleur s'effectuent ainsi séparément et successivement.

Avantageusement enfin, les modules d'impression sont des modules laser et à jet d'encre, respectivement, et les deux modules d'impression comprennent un four commun de fixation de poudre et d'encre d'impression.

L'invention sera mieux comprise à l'aide de la description suivante de plusieurs formes de réalisation de l'imprimante de l'invention, en référence au dessin annexé sur lequel :
- la figure 1 représente une vue schématique d'un bloc d'impression de l'une des formes de réalisation de l'imprimante ;
- la figure 2 représente une vue schématique d'un bloc d'impression d'une variante de réalisation de l'imprimante de la figure 1 ;
- la figure 3 représente une vue schématique d'un bloc d'impression selon une autre forme de réalisation de l'imprimante ; et
- la figure 4 représente un schéma bloc fonctionnel de l'imprimante de la figure 1.

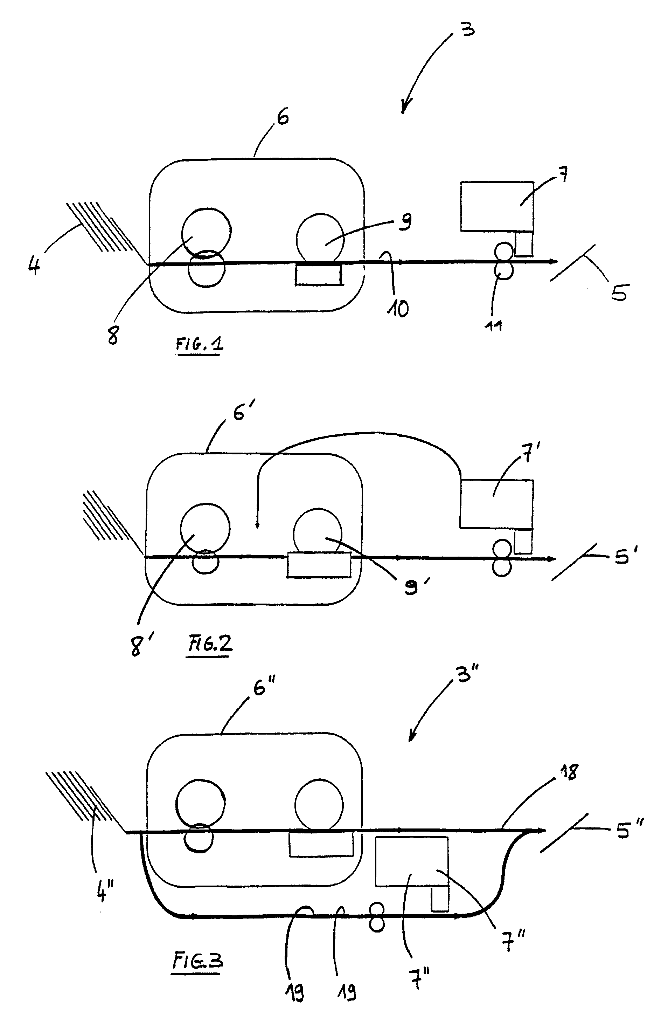

L'imprimante de la forme de réalisation de la figure 1 est ici intégrée dans un télécopieur.

La demanderesse entend toutefois ne pas limiter la portée de sa demande à cet exemple particulier, mais au contraire l'étendre à tout appareil de bureau pourvu d'un bloc d'impression. Par souci de clarté, seuls les éléments du télécopieur relatifs à l'impression seront décrits.

Le télécopieur comprend un bloc 1 de réception de télécopie relié à une mémoire de télécopie 2 destinée à contenir, sous forme de données, les documents de télécopie reçus après transmission depuis un télécopieur distant via un réseau de télécommunication, en l'espèce le réseau de télécommunication commuté (RTC). Chaque document de télécopie comprend au moins une image destinée à être imprimée sur une face d'une feuille d'impression support. Les images à imprimer, stockées dans la mémoire de télécopie, peuvent être monochromes ou polychromes. Chaque image stockée est ici constituée par un ensemble de points caractérisés par leur position et leur couleur.

L'imprimante du télécopieur comprend un bloc d'impression 3 communiquant en entrée avec un magasin 4 d'alimentation en feuilles support, et en sortie avec un réceptacle 5, respectivement par l'intermédiaire de deux systèmes d'entraînement de feuille support, non représentés.

Le bloc d'impression 3 comprend un module d'impression monochrome 6, ici laser, à tête laser ou à barrette de diodes, et un module d'impression polychrome 7, ici à jet d'encre.

Le module d'impression monochrome laser 6 comporte, de façon connue, une cartouche de toner ici de couleur noire, un tambour photosensible d'impression 8, une tête d'émission laser, un dispositif de balayage d'impression à miroir tournant, et un four 9 de fixation de la poudre de toner.

Le module 7 d'impression polychrome à jet d'encre comprend trois têtes jet d'encre de couleurs respectives cyan, magenta et jaune, et ici une tête jet d'encre de couleur noire. On pourrait également envisager de remplacer les trois têtes de couleur par une seule tête reliée à trois cartouches de couleurs cyan, magenta et jaune.

On rappelle que la technique à jet d'encre repose sur l'addition des couleurs.

Les modules d'impression laser 6 et à jet d'encre 7 sont disposés en série, respectivement à la suite l'un de l'autre dans le sens d'entraînement, le long d'un chemin unique 10 d'entraînement de feuille support s'étendant entre le magasin d'alimentation 4 et le réceptacle 5.

Un autre système 11 d'entraînement de feuille support est disposé le long du chemin 10 entre les deux modules d'impression 6, 7. En outre, chaque module d'impression 6, 7 comprend un détecteur de position, non représenté, destiné à détecter la présence d'une feuille support.

Le bloc d'impression 3 est relié à la mémoire de télécopie 2 par l'intermédiaire d'un bloc 21 d'analyse des couleurs de l'image à imprimer.

Le bloc 21 d'analyse des couleurs comporte deux mémoires de travail 12, 13 reliées à un module d'analyse 14 destiné à déterminer, point à point, les couleurs d'une image à imprimer, stockée dans la mémoire de télécopie 2, afin de discriminer les points d'image de couleur noire et les points d'image de couleur non noire, et de les stocker respectivement dans les deux mémoires de travail 12, 13.

En outre, un bloc de gestion 15 connecté au bloc réception 1, au bloc d'analyse 21, au bloc d'impression 3, et aux systèmes d'entraînement, est destiné à commander le fonctionnement de ces éléments.

Enfin, une interface homme-machine 16, reliée au bloc de gestion 15, comprend un sélecteur 17 pour sélectionner l'un des trois modes d'impression laser, à jet d'encre et mixte (laser et à jet d'encre).

Après la description structurelle de l'imprimante, son fonctionnement va maintenant être décrit.

Un utilisateur du télécopieur sélectionne au préalable l'un des modes d'impression à l'aide du sélecteur 17 de l'interface homme-machine 16.

Le cas où l'impression mixte est sélectionné va d'abord être explicité.

Après réception d'un document de télécopie par le bloc de réception 1 via le réseau RTC, le document est stocké dans la mémoire de télécopie 2. Par souci de clarté, le document de télécopie comprend ici une seule image polychrome comprenant un texte de caractères noirs dans lequel est inséré un graphe en couleurs.

Sous la commande du bloc de gestion 15, le module d'analyse 14 analyse point à point les couleurs de l'image de télécopie afin de discriminer les points d'image selon leur couleur. Les points d'image de couleur noire, ou d'une nuance de gris, et les points d'image de couleurs non noires sont respectivement stockés dans les deux mémoires de travail 12, 13.

Après l'analyse des couleurs de l'image et sous la commande du bloc de gestion 15, une feuille support est entraînée en continu depuis le magasin d'alimentation 4 le long du chemin d'entraînement 10 par les systèmes d'entraînement.

Au cours de son entraînement, la feuille est d'abord introduite dans le module d'impression laser 6 qui est mis en fonctionnement sous la commande du détecteur de position et du bloc de gestion 15. Les points d'image de couleur noire, contenus dans l'une 12 des deux mémoires et constituant le texte de caractères noirs, sont imprimés par l'impression laser, puis la poudre de toner est séchée dans le four de fixation 9.

La feuille est ensuite entraînée, toujours en continu, dans le module 7 d'impression à jet d'encre. Sous la commande du détecteur de position et du bloc de gestion 15, les points d'image de couleur non noire, contenus dans l'autre mémoire 13 et constituant le graphe en couleurs, sont imprimés par jet d'encre.

Ainsi, les fonctionnements respectifs du module d'impression laser 6 et du module d'impression à jet d'encre 7 sont complémentaires, chacun des modules imprimant les points d'image que l'autre module n'imprime pas.

Enfin, la feuille est éjectée dans le réceptacle.

Dans le cas où seule l'impression laser est sélectionnée, et après réception et stockage d'une image de télécopie dans la mémoire de télécopie, le bloc de gestion 15 commande l'entraînement en continu d'une feuille support depuis le magasin d'alimentation 4, le long du chemin d'entraînement 10, sans discrimination préalable des points de l'image. Tous les points de l'image contenus dans la mémoire de télécopie 2 sont imprimés en noir sur la feuille support, par impression laser. Après l'impression, la feuille support est directement éjectée dans le réceptacle 5 sans impression dans le module 7 d'impression à jet d'encre.

De même, dans le cas où seule l'impression à jet d'encre est sélectionnée, une image stockée dans la mémoire de télécopie 2 est imprimée, sans discrimination préalable des points d'image, par le seul module 7 d'impression à jet d'encre. On soulignera que le module 7 d'impression à jet d'encre peut imprimer non seulement des points de couleurs diverses par addition des couleurs cyan, magenta et jaune, mais aussi des points de couleur noire.

Dans la description qui vient d'être faite, le module d'analyse 21 analyse la couleur de chaque point de l'image. Dans une variante de réalisation, le module d'analyse analyse la couleur de pavés d'image constitués par un ensemble de points d'image, l'ensemble des pavés formant l'image à imprimer. On notera que les pavés peuvent avoir toute forme appropriée.

Les pavés d'image sont discriminés selon leur couleur, puis stockés dans l'une ou l'autre des deux mémoires de travail selon qu'ils sont globalement de couleur noire (ou d'une nuance de gris) ou de couleur non noire (ou grise).

On pourrait également envisager un module d'analyse des couleurs agencé pour évaluer si l'image est globalement monochrome ou polychrome.

Dans une variante, l'imprimante mixte comprend un four commun de fixation de poudre et d'encre d'impression disposé le long du chemin d'entraînement après les deux modules d'impression laser et jet d'encre dans le sens d'entraînement.

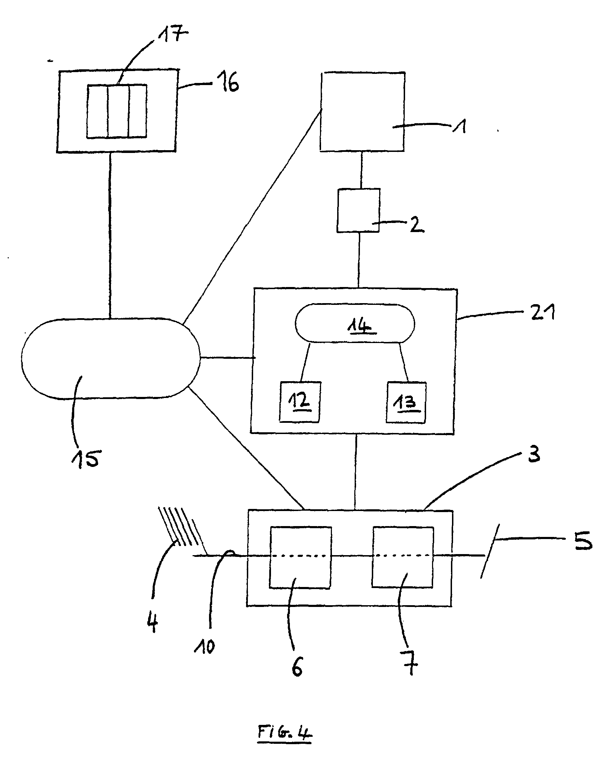

Dans ce cas et en référence à la figure 2, il pourrait encore être prévu d'intégrer le module 7' d'impression à jet d'encre dans le module 6' d'impression laser, en l'interposant entre les éléments d'impression laser, tels que le tambour 8', le dispositif de balayage à miroir tournant et la tête d'émission laser, et le four de fixation 9' du module d'impression laser.

Une autre forme de réalisation de l'imprimante représentée sur la figure 3 ne diffère des formes de réalisation décrites ci-dessus que par les seuls éléments qui vont maintenant être décrits.

L'imprimante comprend un bloc d'impression 3" comportant deux chemins 18, 19 d'entraînement de feuille support disposés en parallèle, communiquant en entrée avec un magasin d'alimentation 4", et en sortie avec un réceptacle 5" par l'intermédiaire de deux systèmes d'aiguillage et d'entraînement de feuille support, non représentés.

Un module d'impression monochrome 6", ici laser et de couleur noire, est disposé le long de l'un 18 des deux chemins, et un module d'impression polychrome 7", ici à jet d'encre de couleurs cyan, magenta, jaune et noire, est disposé le long de l'autre chemin 19.

Un système d'entraînement de feuille support est ici disposé sur chaque chemin d'entraînement.

Un module d'analyse relié à la mémoire de télécopie et au bloc d'impression 3"', est destiné à évaluer si une image à imprimer, contenue dans la mémoire de télécopie, est globalement monochrome, autrement dit de couleur noire ou d'une teinte de gris, ou polychrome c'est-à-dire présentant diverses couleurs.

En outre, un bloc de gestion est relié au bloc de réception, au module d'analyse, au bloc d'impression 3"', aux systèmes d'aiguillage, aux systèmes d'entraînement, et à une interface homme-machine pourvue d'un sélecteur de mode d'impression. Le sélecteur est destiné à sélectionner soit l'impression laser, soit l'impression à jet d'encre, soit l'impression automatique.

Dans le cas où l'impression automatique est sélectionnée, et après réception et stockage d'une image de télécopie dans la mémoire de télécopie, le module d'analyse évalue si l'image est globalement monochrome noire, ou polychrome.

Si l'image est globalement monochrome noire, une feuille support est aiguillée et entraînée en continu, depuis le magasin d'alimentation 4" le long du chemin d'entraînement 18 d'impression laser, sous la commande du bloc de gestion. Le module d'impression laser 6" est mis en fonctionnement et imprime l'image lors du passage de la feuille support. Après l'impression laser, la feuille support est éjectée dans le réceptacle 5.

Si l'image est polychrome, une feuille support est aiguillée et entraînée en continu le long du chemin 19 d'impression à jet d'encre, entre le magasin d'alimentation 4" et le réceptacle 5". L'image est imprimée sur la feuille support par le module 7" d'impression à jet d'encre disposant de quatre encres de couleurs respectives cyan, magenta, jaune et noire.

Dans le cas où l'une des deux impressions laser et à jet d'encre est sélectionnée par un utilisateur, la feuille support est aiguillée, entraînée et imprimée le long du chemin correspondant, sans analyse préalable des couleurs.

Dans la description des différentes formes de réalisation qui vient d'être faite le module d'impression monochrome est laser et le module d'impression polychrome est à jet d'encre. On pourrait également envisager d'utiliser toute autre technique d'impression monochrome ou polychrome, ou encore d'utiliser un module d'impression monochrome à jet d'encre et un module d'impression polychrome laser.

## Revendications

1. Imprimante pour appareil de bureau comportant, pour imprimer sur un support d'impression une image stockée dans une mémoire, deux modules d'impression monochrome (6, 6', 6") laser et d'impression polychrome (7, 7' 7") à jet d'encre, respectivement, **caractérisée par le fait que**, l'image étant constituée d'un ensemble de points, elle comprend des moyens (21) d'analyse des couleurs de ladite image agencés pour analyser par points ou par pavés de points la couleur de l'image et pour commander les fonctionnements complémentaires des deux modules d'impression afin d'imprimer l'image.

2. Imprimante selon la revendication 1, dans laquelle les moyens d'analyse des couleurs sont agencés pour évaluer si l'image est globalement monochrome ou polychrome.

3. Imprimante selon l'une des revendications 1 à 2, dans laquelle les deux modules d'impression (6, 7 ; 6', 7') sont couplés en série le long d'un chemin d'impression unique (10).

4. Imprimante selon la revendication 2, dans laquelle les deux modules d'impression (6", 7") sont couplés en parallèle le long de deux chemins d'impression (18, 19) laser et encre (7'), respectivement, et les deux modules d'impression (6', 7') comprenant un four commun (9') de fixation de poudre et d'encre d'impression.

5. Imprimante selon l'une des revendications 1 à 4, dans laquelle les deux modules d'impression (6', 7') comprennent un four commun (9') de fixation de poudre et d'encre d'impression.

## Patentansprüche

1. Druckeinheit für ein Bürogerät zum Drucken eines in einem Speicher gespeicherten Bildes auf einem Druckträger, umfassend zwei Module für einen einfarbigen Laserdruck (6, 6', 6") und einen mehrfarbigen Tintenstrahldruck (7, 7', 7"),
**dadurch gekennzeichnet, dass**
er, wenn das Bild aus einer Anzahl von Punkten besteht, Mittel (21) zur Analyse der Farben dieses Bildes umfasst, die dafür ausgelegt sind, die Farbe des Bildes nach Punkten oder nach Blöcken von Punkten zu analysieren und Mittel umfasst, um die ergänzenden Funktionen der beiden Druckmodule zum Drucken des Bildes zu steuern.

2. Drucker nach Anspruch 1,
**dadurch gekennzeichnet, dass**
die Mittel zur Analyse der Farben dafür ausgelegt sind, zu ermitteln, ob das Bild im Wesentlichen einfarbig oder mehrfarbig ist.

3. Drucker nach einem der Ansprüche 1 bis 2,
**dadurch gekennzeichnet, dass**
die beiden Druckmodule (6, 7; 6', 7') längs eines einzigen Druckwegs (10) in Reihe gekoppelt sind.

4. Drucker nach Anspruch 2,
**dadurch gekennzeichnet, dass**
die beiden Druckmodule (6", 7") längs zweier Druckwege (18, 19) für Laser- und Tintendruck parallel gekoppelt sind und die beiden Druckmodule (6', 7') einen gemeinsamen Ofen (9') zur Fixierung von Druckpulver und -tinte umfassen.

5. Drucker nach einem der Ansprüche 1 bis 4,
**dadurch gekennzeichnet, dass**
die beiden Druckmodule (6', 7') einen gemeinsamen Ofen (9') zur Fixierung von Druckpulver und -tinte umfassen.

## Claims

1. Printer for an office appliance having, to print an image stored in a memory onto a printing medium, two modules: a monochrome laser printing module (6, 6', 6"), and an ink-jet polychrome printing module (7, 7', 7") respectively, **characterised by** the fact that, the image being formed of a set of points, the printer comprises means (21) for analysing the colours of said image, the means being arranged to analyse the colour of the image by points or by blocks of points and to control the complementary operations of the two printing modules in order to print the image.

2. Printer as claimed in Claim 1, wherein the colour analysing means are arranged to evaluate whether the image is generally monochrome or polychrome.

3. Printer as claimed in any one of Claims 1 to 2, wherein the two printing modules (6, 7; 6', 7') are serially coupled along a single printing path (10).

4. Printer as claimed in Claim 2, wherein the two printing modules (6", 7") are parallel coupled along two laser and ink (7') printing paths (18, 19) respectively and the two printing modules (6', 7') comprising a common heating device (9') for fixing the powder and the printing ink.

5. Printer as claimed in any one of Claims 1 to 4, wherein the two printing modules (6', 7') comprise a common heating device (9') for fixing the powder and the printing ink.
